**Europäisches Patentamt**

**(19)** **European Patent Office**

**Office européen des brevets**

**(11)** Publication number : **0 414 514 B1**

# **(12)** EUROPEAN PATENT SPECIFICATION

**(45)** Date of publication of patent specification :
**10.05.95 Bulletin 95/19**

**(51)** Int. Cl.⁶ : **H02G 1/08,** H02G 1/06,
H02G 3/04, H02G 9/06

**(21)** Application number : **90309189.0**

**(22)** Date of filing : **22.08.90**

**(54)** Cable ducting and method for installing cables through ducts.

**(30)** Priority : **23.08.89 US 397740**

**(43)** Date of publication of application :
**27.02.91 Bulletin 91/09**

**(45)** Publication of the grant of the patent :
**10.05.95 Bulletin 95/19**

**(84)** Designated Contracting States :
**DE ES FR GB IT**

**(56)** References cited :
**WO-A-86/00283**
**AU-D- 1 261 688**
**DE-A- 1 415 474**
**DE-A- 3 529 541**
**DE-U- 8 901 210**
**GB-A- 1 259 285**
**US-A- 4 759 389**

**(73)** Proprietor : **ARNCO CORPORATION**
**860 Garden Street**
**Elyria, Ohio 44036 (US)**

**(72)** Inventor : **Washburn, Robert B.**
**16610 Sedalia Avenue**
**Cleveland, Ohio 44135 (US)**

**(74)** Representative : **Jones, Colin et al**
**W.P. THOMPSON & CO.**
**Coopers Building**
**Church Street**
**Liverpool L1 3AB (GB)**

## Description

The present invention relates to cable ducting and to cable installation.

When it was discovered that fibre-optic cable could be used more efficiently than electric wires for the transmission of telephone conversations, a need for an enormous replacement undertaking became apparent. The copper cable that was previously used underground had to be replaced by fibre-optic cable in a cost-efficient manner which would maintain the integrity of the transmission cable.

When installing the fibre-optic transmission cable, which is usually sheathed in a thermoplastic insulator, there are a number of problems that must be avoided. The plastic sheathing itself must not encounter any sharp surfaces that damage or shave it away to any substantial degree. If this were to happen, exposure of the light guide would occur, along with the pertinent problems. Moreover, tension must not exceed a certain safety margin of the transmission cable or it might break.

Because of the forces necessary to pull the transmission cable through a duct, it is highly advantageous to lower the friction between the transmission cable and its duct. When the coefficient of friction of the duct is lowered, the resulting lower forces to pull the cable through the duct allow longer lengths to be strung without a relay.

Previously, transmission cable was pulled through a duct which either had no interior ribs or had longitudinal interior ribs. An example of the ribbed duct is shown in US-A-4,565,351. Alternatively, transmission cable was strung through corrugated ducting, i.e. ducting having transverse ribs. Each of these ducts caused problems. Smooth-walled ducting had the highest coefficient of friction, and therefore required high forces to be used when pulling a transmission cable there-through. As a result, relatively short lengths of transmission cable could be placed underground before the forces built up to the point where the cable itself became endangered.

Corrugated and longitudinally ribbed ducting reduced surface friction with the cable. Both the longitudinally ribbed and smooth-walled ducts, however, had a tendency to damage the cable sheath. Such damage to the sheath would not normally be discovered until a later date, and replacement of the cable would be necessary. The replacement process was highly undesirable and needlessly expensive.

Corrugated tubing had a relatively low coefficient of friction relative to the transmission cable, and did not have a tendency to damage the sheathing. However, corrugated ducting is relatively thin and has uneven walls because of the necessity of continuously blow-moulding it during its manufacturing process. Moreover, the thin-walled corrugations had a tendency to stretch or break during field installation because of their own relatively low tensile strength. The flexible nature of corrugated tubing also allowed it to rotate and shear. The thin wall thickness also wore quickly and perforated when transmission cable was pulled through it. The depth of the corrugations is generally two to four times as deep as longitudinal ribs, thus causing the lubricant to well up between successive corrugations and impede normal cable lubrication efforts.

DE-A-3529541 discloses a duct of the kind for transmission and other cable, the duct comprising polymeric tubing having spiral ribs with peaks and valleys along the inner wall, the peaks forming a surface over which the cable may travel to reduce the friction of travel of the cable through the duct.

DE-U-8901210 discloses a cable which has a plastics sheath and which is to be drawn through a cable duct. Friction between the cable sheath and the cable duct is reduced by forming projections on the outside of the plastics sheath. Such projections can be in the form of spiral ribs which have alternating directions of slope. A lubricant may be placed in groove like depressions in the tips of the ribs if these tips are of sufficient width.

According to the present invention, a duct of the above kind is characterised in that the spiral ribs along the inner wall of the duct turn in one direction and then in the other direction.

Preferably, lubricant is received in the valleys.

The invention includes a duct system comprising:-

an outer duct under the surface of the ground and extending between two points;

a plurality of ducts in the outer duct, each of the ducts comprising polymeric tubing with spiral ribs along the inner walls of the tubing, the spiral ribs having peaks and valleys, the peaks forming a surface over which cable may pass at reduced friction without contacting the valleys and cables in the ducts; characterised in that the spiral ribs along the inner wall of each duct turn in one direction and then in the other direction in alternating fashion. Preferably, lubricant is received in the valleys.

The invention also includes a method for installing a cable in a duct and a method for installing a cable in a duct and installing the duct in an outer duct.

The use of spiral ribs has been found to give the best combination of results when used with a transmission cable for reducing the friction between the cable and the duct, providing structural integrity of the tubing, and not damaging the sheath on the cable. The spiral ribs act much like corrugations in that they do not shave off the sheathing because the cable tends to pass over them in a transverse manner. The internally spiralled duct is much stronger than corrugated tubing and does not have a tendency to rip or tear during its installation. It is also flexible enough to go around corners. The valleys between the spiral ribs also act as a resrvoir for lubricant which is commonly used to reduce friction between the cable and the duct.

The invention is further described, by way of example, with reference to the accompanying drawings, in which:-

Fig.1 is a schematic representation of the installation of multiple ducts which are surrounded by an outer duct;

Fig.2 is a longitudinal section of a duct according to this invention;

Fig.3 is a transverse cross section of the duct of Fig.2;

Fig.4 is a developed view of internal spiral ribs of the duct of Figs. 2 and 3;

Fig.5 is a perspective view which illustrates one embodiment of exterior ribs of a duct according to the invention;

Fig.6 is a similar view which illustrates an alternative embodiment of exterior ribs on the duct;

Fig.7 is a cross-section which illustrates a plurality of ducts and transmission cables;

Fig.8 is a schematic representation of the installation of ducts in an open trench; and

Fig.9 is a schematic representation of the direct installation of ducts by means of a plough.

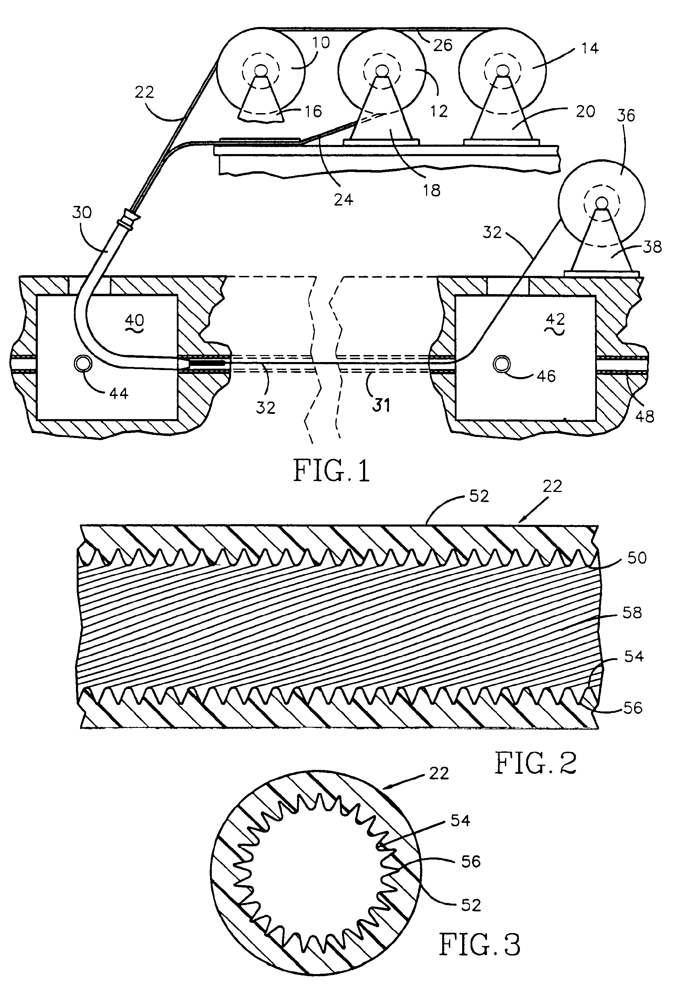

As particularly illustrated in Fig.1, a plurality of takeoff reels 10, 12 and 14 on stands 16, 18 and 20, respectively, are located so that they feed a plurality of ducts 22, 24 and 26 into a feeder tube 30. The feeder tube 30, as well as the apparatus for pulling the ducts through an outer duct 31, is described in US-A-4,296,157; US-A-4,028,473; and US-A- 4,326,605. As described therein, lubricant is also often used and is fed into the feeder tube with the transmission cable.

The ducts 22, 24 and 26 are pulled by means of a draw line 32 towards a take-up reel 36 mounted on a stand 38. The draw line 32 is attached to the duct, as described in the above-noted US-A- 4,028,473. The draw line 32 is wound on the reel 36 and is followed by the duct. As a result of this invention, the distance from the work area 40 to the work area 42 has been substantially increased for the length of the transmission cable that may be pulled through the duct. At the present time, this distance may be 914 to 1828m (3000 to 6000 feet) with the use of this invention.

Normally, the duct transmission or other cable enters a work area, such as 40, by means of an outer duct 44 and may be passed back into another outer duct, such as 46 or 48, to relay them to another location.

As particularly illustrated in Figs, 2, 3 and 4, the inner wall 50 of the duct 22 has peaks 54 and valleys 56 forming spiral ribs 58 along the interior of the tubing. Although not shown, the direction of spiral of the ribs 58 alternates. The material which comprises the duct is normally a thermoplastic, such as polyethylene, although other materials are well known in the art. The lubricant used with the transmission cable is that such as described in US-A- 4,111,820.

The use of spiral ribs has been found to reduce dramatically the coefficient of friction without noticeably damaging the cable sheaths or jackets when the cable is pulled through. The coefficient of friction (f) of the transmission cable as it passes over the spiral ribs can be measured over various load and velocity conditions by pulling cable through a duct coiled about a fixed drum. The following mathematical relationship can be used to calculate values of f from cable tension measurments leading into and out of a duct loop:

$$f = (1/2\pi n).\ell n \text{ (tension out/tension in)}$$

where n is the number of complete duct wraps about the fixed drum and $\ell n$ is the natural logarithm.

It has also been found that velocity has an effect on the measured values, such that either load or velocity must remain constant to compare test data. In testing, it was found that the relationship between f and velocity varied in a predictable way which could be mathematically expressed as $K = f/\log \bar{v}$, where K is known as the velocity-compensated frictional load factor and $\bar{v}$ is the average velocity. By comparing values of K a more accurate picture is expressed relating friction, load and pulling velocity. For any constant incoming load, both f and K can be calculated. In actual tests, the following load factors K were found for unlubricated duct:

## Load Factors (K)

| Incoming Load on Loop | 4.81kg (10.6lb) | 9.07kg (20.0lb) | 11.34kg (25.0lb) | 16.15kg (35.6lb) | 18.14kg (40.0lb) |
|---|---|---|---|---|---|
| No spiral longi- tudinally | 0.1008 +.0111 | 0.0916 - | fused | can't pull | can't pull |
| 1 turn/ 1.828 m (6 ft) | 0.0925 +.0072 | 0.0838 +.0128 | 0.0764 +.0055 | 0.0896 +.0362 | fused |
| 1 turn/ 0.914 m (3 ft) | 0.0936 +.0089 | 0.0787 +.0065 | 0.040 +.004 | 0.0740 +.0073 | |
| 1 turn/ 0.609 m (2 ft) | 0.0896 +.0036 | 0.0813 +.0068 | 0.0822 +.0067 | 0.0754 +.0062 | 0.0717 |
| 1 turn/ 0.305 m (1 ft) | 0.0905 +.0083 | 0.0772 +.0051 | 0.0752 +.0027 | 0.0756 +.0070 | |

Thus, even at relatively low degrees of spiralling, such as one turn per 1.828m (six feet), the velocity-compensated load factor (coefficient of friction) is substantially reduced to 0.0764 at the 11.34kg (25 pound) incoming load, whereas its non-spiralled counterpart fused the cable to the duct wall. In addition, the coefficient of friction is minimized, at between one third and one turn per 0.305m (1 ft).

The testing showed other important ramifications. Regardless of how sharp the spiral ribs were pointed, no jacket cutting or abrasion to the cable was observed. This is a significant improvement over both smooth-walled and longitudinally ribbed ducts. In those cases, resulting damage from shearing, cutting, and fusion to the cable commonly occurred. The spiral ribbed duct did not itself experience any damage such as that commonly found in corrugated tubing. Moreover, although the ribbing is spiral, there was no tendency to twist the transmission cable.

Because lubricants are commonly used during transmission cable placement, it is desirable to keep the frequency of spirals as low as possible in order to have the lubricant pass efficiently along the cable. Lack of passage of the lubricant is another drawback of corrugated duct, since the lubricant tends to be wiped off with the initial corrugations. With a low frequency spiral, however, lubricant is free to move along the duct, again gaining the benefit of low friction corrugations with ease of lubrication. With lubrication manufactured by Arnco Corp., Model No. SF150DF, load factors as low as 0.0050 have been measured for cable travelling at 30.48 m/min (100 ft/min) with an incoming load of 90.72 kg (200 pounds).

The duct diameter is not critical, although typically ducts range from 25.4 mm to 152.4 mm (one inch to six inches) inside diameter. Wall thicknesses may also vary, but useful thicknesses are sizes such as Standard Thermoplastic Pipe Dimension Ratio or standard inside dimension ratio (SIDR) 5 to 21. The SIDR is equal to the average internal diameter divided by the minimum wall thickness. Rib height preferably is from about 0.127 mm to 3.81 mm (0.005 inch to 0.150 inch), with the preferred being about 0.381 mm (0.015 inch). The rib spacing typically varies between about 0.635 mm and 12.5 mm (0.025 inch and 0.500 inch), with the preferred spacing being 3.175 mm (0.125 inch). The frequency of spirals can range between 32.8 turns per m and 0.16 turns per m (10 revolutions per foot and 0.05 revolution per foot), the preferred being about 1.08 turns per m (0.33 revolution per foot), or one revolution every 0.914 m (three feet). The direction of spiral rotation is altered in a periodic fashion to create a sinusoidal wave.

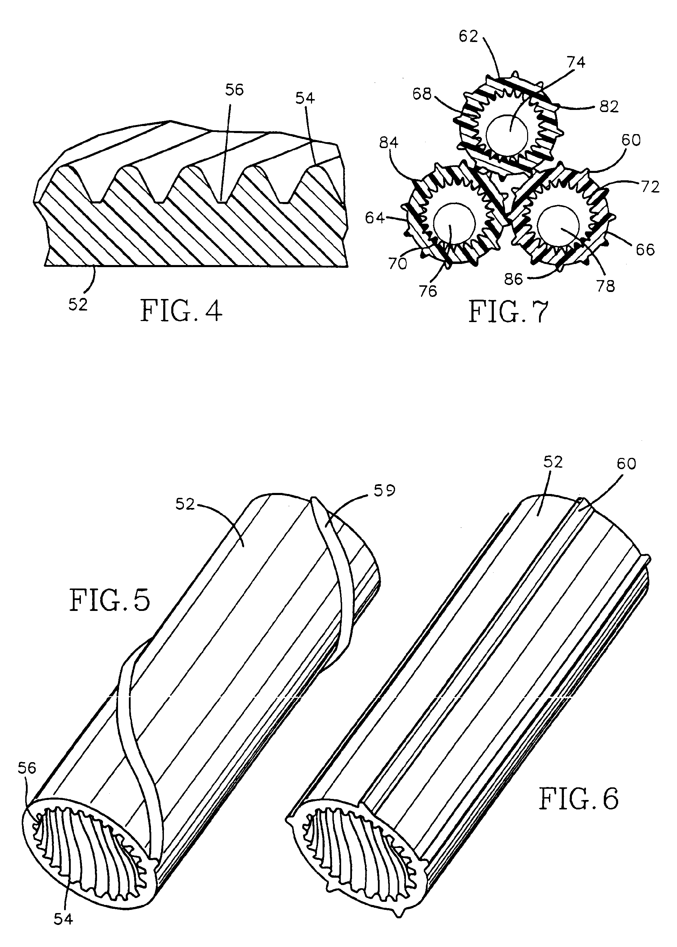

The outer wall 52 of the duct may be smooth, as shown in Figs. 2 to 4, or, alternatively, as illustrated in Figs. 5 and 6, may be ribbed along the length thereof. A spiral rib 59 may be used along the outer wall 52. The spiral nature of the rib will add additional strength, and also will cause a type of interlocking with other ducts if they are placed together as illustrated in Fig.7. Alternatively, longitudinal ribs 60, as shown in Fig.6, may be used along the outer wall 52 to aid in inserting the duct through an outer duct. The use of the ribbing reduces friction in this regard, as does the internal spiral ribbing 58. The benefit of alternating the direction of the spiral ribs 58 is that a cable passed through the duct will not have a tendency to rotate with the spiral. By reducing the area of the duct that touches the outer duct, the friction, and therefore the force needed to pull the duct through the outer duct, is substantially reduced.

As illustrated in Fig.7, a series of ducts 62, 64, and 66 having inner walls with spiral ribs 68, 70, and 72, respectively, are used to hold transmission cables 74, 76 and 78. Exterior ribs 82, 84 and 86 interlock with each other, whether spiral or longitudinal, in order to prevent rotation of one duct relative to the other. Typically, there are four to five ribs per linear 25.4 mm (one inch) around the duct of this invention. The three conduits shown in Fig.7 may be connected along their length in the moulding process or, alternatively, may be moulded separately and placed in the ground separately.

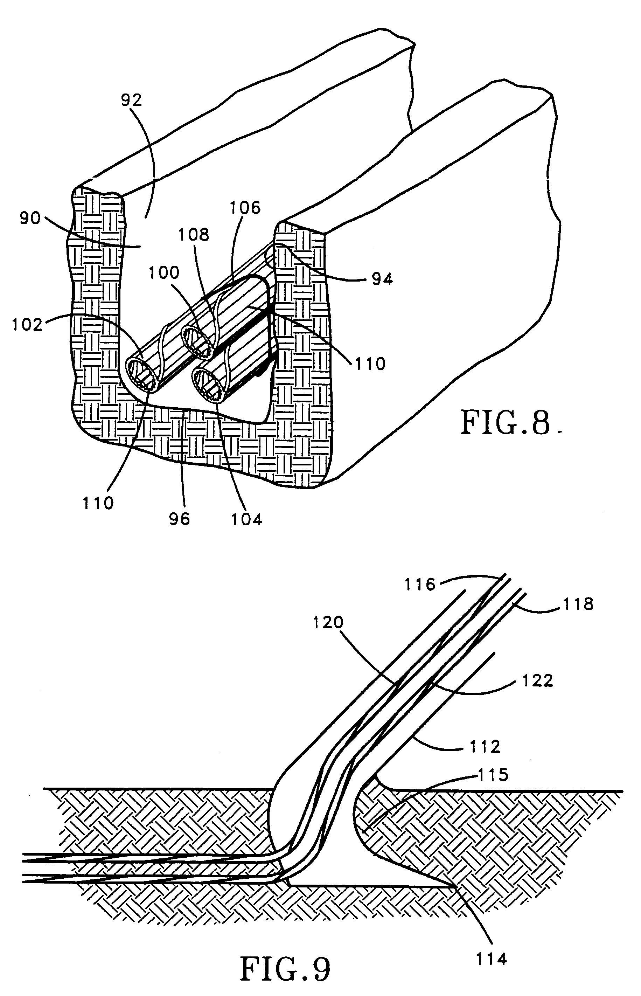

Fig.8 illustrates an open trench 90 having side walls 92, 94 and a bottom 96. Ducts 100, 102 and 104 are laid in the trench 90 in a generally triangular fashion and are bound together by a band 106. The ducts have spiral ribs 108 on their outer wall 110. Similarly, there are spiral ribs on the inner wall of the duct. The ribs 108 may also be longitudinal so that the ducts interlock and do not rotate relative to one another. After the ducts have been laid, they are covered with soil.

Another method of laying the ducts is known as "direct plough". By this method, a plough 112 is attached to a large tractor (not shown). As the plough moves forward, or from left to right as shown in Fig.9, the point 114 disrupts the earth and loosens it so that the ducts 116 and 118 having spiral ribs 120, 122 can pass through the hollow inner section, out of the back of the plough and into the ground. In this embodiment, it is not necessary to cover the ducts in a subsequent step. Accordingly, this process is relatively fast. As previously discussed, the optical cables are then passed through the ducts after they have been laid in place.

## Claims

1. A duct for transmission and other cable, the duct comprising polymeric tubing having spiral ribs (58) with peaks (54) and valleys (56) along the inner wall (50), the peaks forming a surface over which cable may travel, to reduce the friction of travel of the cable through the duct, characterised in that the spiral ribs (58) along the inner wall of the duct turn in one direction and then in the other direction.

2. A duct as claimed in claim 1, in which lubricant is received in the valleys (56).

3. A duct as claimed in claim 1 or 2, wherein each rib makes about one revolution for about 0.305m to 1.829 m (one to six linear feet) in one direction and then in the other direction in an alternating fashion.

4. A duct as claimed in claim 1, 2 or 3, wherein the tubing has an inside diameter from 12.5 mm to 152.4 mm (1/2 inch to 6 inches) and a wall thickness from SIDR 5 to 21.

5. A duct as claimed in any of claims 1 to 4, wherein the rib height is from about 0.127 mm to 3.175 mm (0.005 to 0.125 inch).

6. A duct as claimed in claim 5, wherein the rib height is about 0.381 mm (0.015 inch).

7. A duct as claimed in any of claims 1 to 6, wherein the rib spacing is from about 0.635 mm to 12.5 mm (0.025 to 0.500 inch).

8. A duct as claimed in claim 7, wherein the rib spacing is about 3.175 mm (0.125 inch).

9. A duct as claimed in any of claims 1 to 8, wherein the outer wall (52) has spiral or longitudinal ribs (59 or 60).

10. A duct as claimed in claim 9, wherein there are about one to six longitudinal outer ribs (60) per linear 25.4 mm (linear inch) measured about the circumference of the tube.

11. A duct as claimed in any of claims 1 to 10, wherein a velocity-compensated coefficient of friction K, where $K = f/\ln v$, f being the coefficient of friction and $\ln v$ being the natural logarithm of the velocity, measured in feet per minute, is about 0.04 to 0.0936.

12. A duct system comprising:
    an outer duct (31) under the surface of the ground and extending between two points;
    a plurality of ducts (22,24,26) in the outer duct (31), each of the ducts (22,24,26) comprising polymeric tubing with spiral ribs (58) along the inner walls of the tubing, the spiral ribs having peaks (54) and valleys (56), the peaks (54) forming a surface over which cable may pass at reduced friction without contacting the valleys and cables in the ducts (22,24,26); characterised in that the spiral ribs (58) along the inner wall of each duct turn in one direction and then in the other direction in alternating fashion.

13. A duct system as claimed in claim 12, in which a lubricant is received in the valleys (56).

14. A method for installing a cable in a duct and installing the duct in an outer duct, wherein one end of a draw line (32) is attached to a duct (22,24,26) according to any of claims 1 to 11, the other end of the draw line being sent through the outer duct (31), and the duct (22,24,26) is pulled through the outer duct (31; and wherein a cable is pulled over the peaks (54) of the spiral ribs (58) in the duct (22,24,26), thereby reducing the force necessary to install the cable and increasing the length of cable that can be pulled through the duct without breaking it.

15. A method for installing a cable as claimed in claim 14, wherein a second polymeric tubing is pulled through the outer duct (31) with the polymeric tubing, the outer walls of the first and second tubing having ribs (82,84,86) along their length which cause an interlocking when the first polymeric tubing and the second polymeric tubing are held together.

16. A method for installing cables in ducts, wherein:
a trench (90) is opened in the soil and ducts (22,24,26) in accordance with any of claims 1 to 11 are laid in the trench (90), ducts (22,24,26) being bound to each other longitudinally to stop them from rotating relative to one another; and wherein
a cable is passed over the peaks (54) of the spiral ribs (58) in each duct (22,24,26), thereby reducing the force necessary to install the cables and increasing the length of cables that can be pulled through the ducts without breaking them.

17. A method of installing a cable in a duct, wherein:
a plough (112) is pulled through the soil, thereby disrupting the soil and loosening it and
at least one duct (22,24,26) in accordance with any of claims 1 to 11 is passed through an opening from the top to the bottom rear area of the plough; and wherein the duct or ducts (22,24,26) is or are placed in the soil; and
a cable is pulled through the or each duct (22,24,26) over the peaks (54) of spiral ribs (58) along the inner wall of the duct, thereby reducing the force necessary to install the cable and increasing the length of cable that can be pulled through the duct without breaking the cable.

## Patentansprüche

1. Kabelrohr für Übertragungs- und andere Kabel, wobei das Kabelrohr polymeres Rohrmaterial mit Spiralrippen (58) mit Spitzen (54) und Kehlen (56) entlang der inneren Wand (50) umfaßt, dessen Spitzen eine Oberfläche bilden, über die sich das Kabel bewegen kann, um die Reibung der Kabelbewegung durch das Kabelrohr zu verringern, dadurch gekennzeichnet, daß sich die Spiralrippen (58) entlang der inneren Kabelrohrwand in eine Richtung und dann in die andere Richtung drehen.

2. Kabelrohr nach Anspruch 1, wobei in den Kehlen (56) Schmiermittel aufgenommen wird.

3. Kabelrohr nach Anspruch 1 oder 2, wobei jede Rippe abwechselnd etwa eine Umdrehung ungefähr 0,305 m bis 1,829 m (ein bis sechs lineare Fuß) weit in eine Richtung und dann in die andere Richtung verläuft.

4. Kabelrohr nach Anspruch 1, 2 oder 3, wobei das Rohrmaterial einen Innendurchmesser von 12,5 mm bis 152,4 mm (0,5 Zoll bis 6 Zoll) und eine Wandstärke von SIDR 5 bis 21 hat.

5. Kabelrohr nach einem der Ansprüche 1 bis 4, wobei die Rippenhöhe etwa 0,127 mm bis 3,175 mm (0,005 bis 0,125 Zoll) beträgt.

6. Kabelrohr nach Anspruch 5, wobei die Rippenhöhe etwa 0,381 mm (0,015 Zoll) beträgt.

7. Kabelrohr nach einem der Ansprüche 1 bis 6, wobei der Rippenabstand etwa 0,635 mm bis 12,5 mm (0,025 bis 0,500 Zoll) beträgt.

8. Kabelrohr nach Anspruch 7, wobei der Rippenabstand etwa 3,175 mm (0,125 Zoll) beträgt.

9. Kabelrohr nach einem der Ansprüche 1 bis 8, wobei die äußere Wand (52) Spiral- oder Längsrippen (59 oder 60) hat.

10. Kabelrohr nach Anspruch 9, das pro um den Rohrumfang gemessenen linearen 25,4 mm (einem linearen Zoll) etwa ein bis sechs Längsaußenrippen (60) aufweist.

11. Kabelrohr nach einem der Ansprüche 1 bis 10, bei dem ein geschwindigkeitskompensierter Reibungskoeffizient K etwa 0,04 bis 0,0936 beträgt, wobei K = f/ln v, wobei f der Reibungskoeffizient und ln v der natürliche Logarithmus der Geschwindigkeit ist, gemessen in Fuß pro Minute.

12. Kabelrohrsystem umfassend:
ein sich unter der Bodenoberfläche und zwischen zwei Punkten erstreckendes äußeres Kabelrohr (31);
eine Mehrzahl von Kabelrohren (22, 24, 26) im äußeren Kabelrohr (31), wobei jedes der Kabelrohre (22, 24, 26) aus polymerem Rohrmaterial mit Spiralrippen (58) entlang der inneren Wände des Rohrmaterials besteht und Kabel in den Kabelrohren (22, 24, 26) aufweist, wobei die Spiralrippen Spitzen (54) und Kehlen (56) aufweisen, wobei die Spitzen (54) eine Oberfläche bilden, über die Kabel mit verminderter Reibung passieren kann, ohne die Kehlen zu berühren, dadurch gekennzeichnet, daß sich die Spiralrippen (58) entlang der inneren Wand jedes Kabelrohrs abwechselnd in eine Richtung und dann in die andere Richtung drehen.

13. Kabelrohrsystem nach Anspruch 12, in dem in den Kehlen (56) ein Schmiermittel aufgenommen wird.

14. Verfahren zum Verlegen eines Kabels in einem Kabelrohr und zum Verlegen des Kabelrohrs in einem äußeren Kabelrohr, wobei ein Ende einer Zugleine (32) an einem Kabelrohr (22, 24, 26) nach einem der Ansprüche 1 bis 11 angebracht wird, das andere Ende der Zugleine durch das äußere Kabelrohr (31) geschickt wird und das Kabelrohr (22, 24, 26) durch das äußere Kabelrohr (31) gezogen wird, und wobei ein Kabel über die Spitzen (54) der Spiralrippen (58) im Kabelrohr (22, 24, 26) gezogen wird, wodurch die zum Verlegen des Kabels erforderliche Kraft reduziert wird und der Kabelabschnitt, der ohne zu zerbrechen durch das Kabelrohr gezogen werden kann, verlängert wird.

15. Verfahren zum Verlegen eines Kabels nach Anspruch 14, bei dem ein zweites polymeres Rohrmaterial durch das äußere Kabelrohr (31) mit dem polymeren Rohrmaterial gezogen wird, wobei die äußeren Wände des ersten und zweiten Rohrmaterials entlang ihrer Länge Rippen (82, 84, 86) haben, die ein Ineinandereingreifen bewirken, wenn das erste polymere Rohrmaterial und das zweite polymere Rohrmaterial zusammengehalten werden.

16. Verfahren zum Verlegen von Kabeln in Kabelrohren, bei dem:
ein Graben (90) im Boden offengelegt wird und Kabelrohre (22, 24, 26) nach einem der Ansprüche 1 bis 11 im Graben (90) verlegt werden, wobei Kabelrohre (22, 24, 26) in Längsrichtung miteinander verbunden werden, um sie daran zu hindern, sich im Verhältnis zueinander zu drehen, und bei dem
ein Kabel über die Spitzen (54) der Spiralrippen (58) in jedem Kabelrohr (22, 24, 26) passiert wird, wodurch die zum Verlegen der Kabel erforderliche Kraft reduziert wird und die Kabelabschnitte, die ohne zu zerbrechen durch die Kabelrohre gezogen werden können, verlängert werden.

17. Verfahren zum Verlegen eines Kabels in einem Kabelrohr, in dem:
ein Pflug (112) durch das Erdreich gezogen wird, wodurch das Erdreich aufgebrochen und gelockert wird, und
mindestens ein Kabelrohr (22, 24, 26) nach einem der Ansprüche 1 bis 11 durch eine von oben bis unten durch den rückwärtigen Bereich des Pflugs verlaufende Öffnung passiert wird und in dem das Kabelrohr oder die Kabelrohre (22, 24, 26) in das Erdreich gelegt werden, und
ein Kabel über die Spitzen (54) von Spiralrippen (58) entlang der inneren Wand des Kabelrohrs durch das oder jedes Kabelrohr (22, 24, 26) gezogen wird, wodurch die zum Verlegen des Kabels erforderliche Kraft reduziert wird und der Kabelabschnitt, der ohne zu zerbrechen durch das Kabelrohr gezogen werden kann, verlängert wird.

## Revendications

1.  Conduit pour câble de transmission et autre câble, le conduit comportant du tube polymère ayant des nervures de renforcement en spirale (58) avec des pics (54) et des creux (56) le long de la paroi intérieure (50), les pics formant une surface sur laquelle le câble peut passer, pour réduire la friction de course du câble au travers du conduit, caractérisé en ce que les nervures de renforcement en spirale (58) le long de la paroi intérieure du conduit se tournent dans un sens puis dans l'autre.

2.  Conduit selon la revendication 1, dans lequel de la matière lubrifiante est reçue dans les creux (56).

3.  Conduit selon la revendication 1 ou 2, dans lequel chaque nervure de renforcement réalise environ une rotation sur une longeur allant de 0,305m à 1,829m (un à six pieds linéaire) dans un sens puis dans l'autre de manière alternée.

4.  Conduit selon la revendication 1, 2 ou 3, dans lequel le tube a un diamètre intérieur allant de 12,5mm à 152.4mm (1/2 à six pouces) et une épaisseur de paroi allant de SIDR (Rapport de Dimension de Tuyau Thermoplastique Standard) 5 à 21.

5.  Conduit selon l'une quelconque des revendications 1 à 4, dans lequel la hauteur de la nervure va de 0,127mm à 3,175mm environ (0,005 à 0,125 pouces).

6.  Conduit selon la revendication 5, dans lequel la hauteur de la nervure est d'environ 0,381mm (0,015 pouce).

7.  Conduit selon l'une quelconque des revendications 1 à 6, dans lequel l'espacement entre les nervures va d'environ 0,635 à 12,5mm (0,025 à 0,500 pouce).

8.  Conduit selon la revendication 7, dans lequel l'espacement entre les nervures est d'environ 3,175mm (0,125 pouce).

9.  Conduit selon l'une quelconque des revendications 1 à 8, dans lequel la paroi extérieure (52) comporte des nervures en spirale ou longitudinales (59 ou 60).

10. Conduit selon la revendication 9, dans lequel se trouve entre une et six nervures longitudinales extérieures (60) environ par 25,4mm linéaire (pouce linéaire) mesuré autour de la circonférence du tube.

11. Conduit comme revendiqué dans l'une quelconque des revendications 1 à 10, dans lequel un coefficient de vélocité compensée de friction K, où K = f/ln v, f étant le coefficient de friction et ln v étant le logarithme népérien de la vélocité, mesuré en pied par minute, est d'environ 0,04 à 0,0936.

12. Système de conduit comportant:
    un conduit extérieur (31) sous la surface du sol et s'étendant entre deux points;
    une pluralité de conduits (22, 24, 26) dans le conduit extérieur (31), chacun des conduits (22, 24, 26) comportant du tube polymère avec des nervures de renforcement en spirale (58) le long des parois intérieures du tube, les nervures de renforcement en spirale ayant des pics (54) et des creux (56), les pics (54) formant une surface sur laquelle le câble peut passer avec une friction réduite sans toucher les creux ni les câbles dans les conduits (22, 24, 26); caractérisé en ce que les nervures de renforcement en spirale (58) le long de la paroi intérieure de chaque conduit tournent dans un sens puis dans l'autre de façon alternée.

13. Système de conduit selon la revendication 12, dans lequel une matière lubrifiante est reçue dans les creux (56).

14. Procédé d'installation d'un câble dans un conduit et installation du conduit dans un conduit extérieur, dans lequel une extrémité d'une ligne de tirage (32) est fixée à un conduit (22, 24, 26) selon l'une quelconque des revendications 1 à 11, l'autre extrémité de ligne de tirage étant forcée au travers du conduit extérieur (31), et le conduit (22, 24, 26) est tiré au travers du conduit extérieur (31); et dans lequel un câble est tiré sur les pics (54) des nervures de renforcement en spirale (58) dans le conduit (22, 24, 26), réduisant ainsi les pressions nécéssaires à l'installation du câble et augmentant la longueur du câble qui peut être tiré au travers du conduit sans le rompre.

**15.** Procédé d'installation d'un câble selon la revendication 14, dans lequel un second tube polymère est tiré au travers du conduit extérieur (31) avec le tube polymère, les parois extérieures du premier et second tubes ayant des nervures de renforcement (82, 84, 86) sur leur longueur qui provoque un enchevêtrement lorsque le premier et le second tubes polymère sont maintenues ensemble.

**16.** Procédé d'installation d'un câble dans des conduits, dans lequel:

une tranchée (90) est creusée dans le sol et les conduits (22, 24, 26) conformément à l'une quelconque des revendications précédentes 1 à 11 sont posés dans la tranchée (90), les conduits (22, 24, 26) étant liés les uns aux autres longitudinalement pour les arrêter de tourner les uns par rapport aux autres; et dans lequel

on passe un câble par-dessus les pics (54) des nervures de renforcement en spirale (58) dans chaque conduit (22, 24, 26), réduisant ainsi les pressions nécéssaires à l'installation des câbles et augmentant la longueur des câbles qui peuvent être tirés au travers des conduits sans les rompre.

**17.** Procédé d'installation d'un câble dans un conduit, dans lequel:

on fait passer un soc (112) dans la terre, remuant ainsi la terre et la rendant meuble et

on passe au moins un conduit (22, 24, 26) selon l'une quelconque des revendications 1 à 11 dans une ouverture depuis le sommet jusqu'à la zone arrière du fond du soc; et dans lequel le conduit ou les conduits (22, 24, 26) est ou sont placés dans le sol; et

on tire un câble au travers du ou de chaque conduit (22, 24, 26) par-dessus les pics (54) des nervures de renforcement en spirale (58) le long de la paroi intérieure du conduit, réduisant ainsi la pression nécéssaire à l'installation du câble et augmentant la longueur du câble qui peut être tiré au travers du conduit sans rompre le câble.

FIG.1

FIG.2

FIG.3

FIG. 4

FIG. 7

FIG. 5

FIG. 6

FIG.8.

FIG.9